# EUROPEAN PATENT APPLICATION

(11) **EP 4 246 630 A1**
(43) Date of publication of application: **20.09.2023**
(21) Application number: 21903469.1
(22) Date of filing: 09.12.2021
(51) Int. Cl.: H01M 4/62, H01G 11/56, H01G 11/84, H01B 1/06, H01B 1/10, H01M 10/052, H01M 10/0562

(54) **SOLID ELECTROLYTE, METHOD FOR MANUFACTURING SOLID ELECTROLYTE, POWER STORAGE ELEMENT, ELECTRONIC DEVICE, AND AUTOMOBILE**

(30) Priority: 10.12.2020 JP 2020205314; 10.12.2020 JP 2020205317
(71) Applicant: GS Yuasa International Ltd., Kisshoin, Minami-ku, Kyoto-shi, Kyoto 601-8520 (JP)
(72) Inventor: FUKUSHIMA, Akihiro, Kyoto-shi, Kyoto 601-8520 (JP)
(74) Representative: Isarpatent
(86) International application number: PCT/JP2021/045341
(87) International publication number: WO 2022/124370

(57) **Abstract**

One aspect of the present invention is a solid electrolyte containing lithium, phosphorus, sulfur, halogen, and an element A, in which the element A is at least one selected from the group consisting of magnesium, calcium, strontium, and barium, and the solid electrolyte has a crystal structure.

## Description

### TECHNICAL FIELD

The present invention relates to a solid electrolyte, a method of producing a solid electrolyte, an energy storage device, an electronic device, and an automobile.

### BACKGROUND ART

A lithium ion secondary battery is widely in use for electronic devices such as personal computers and communication terminals, automobiles, and the like because the battery has high energy density. The lithium ion secondary battery generally includes a pair of electrodes, which are electrically separated from each other by a separator, and a nonaqueous electrolyte interposed between the electrodes, and is configured to allow lithium ions to be transferred between the two electrodes for charge-discharge. A capacitor such as a lithium ion capacitor is also widely in use as an energy storage device except for the lithium ion secondary battery.

In recent years, as a nonaqueous electrolyte, an energy storage device using a solid electrolyte such as a sulfide-based solid electrolyte instead of a nonaqueous electrolyte solution in which an electrolyte salt is dissolved in a liquid such as an organic solvent has been proposed. As one of sulfide-based solid electrolytes, Patent Document 1 describes a sulfide solid electrolyte material which includes Li, A (A is at least one of P, Si, Ge, Al, and B), X (X is halogen), and S, is a glass ceramic, and has peaks at 2θ = 20.2° and 23.6° in X-ray diffraction measurement using a CuKα ray. In Patent Document 1, a sulfide solid electrolyte having a composition specifically represented by xLiI ·(100-x)(0.75Li₂S·0.25P₂S₅) is synthesized, and ionic conductivity and the like are evaluated.

### PRIOR ART DOCUMENT

### PATENT DOCUMENT

Patent Document 1: JP-A-2013-016423

### SUMMARY OF THE INVENTION

### PROBLEMS TO BE SOLVED BY THE INVENTION

One of advantages of the solid electrolyte as compared with the nonaqueous electrolyte solution is high thermal stability. However, in the conventional solid electrolyte, thermal stability at a high temperature such as 200°C or higher is not necessarily sufficient. For example, Patent Document 1 describes that a solid electrolyte having a high Li ion conductive crystal phase cannot be obtained when heat treatment is performed at 200°C or higher, and a solid electrolyte having the high Li ion conductive crystal phase is obtained by heat treatment at lower than 200°C. The high Li ion conductive crystal phase described in Patent Document 1 is a metastable phase having a high ionic conductance, and hereinafter, a similar phase having a high ionic conductance is also referred to as HICP (High Ion Conduction Phase). That is, in the solid electrolyte described in Patent Document 1, the HICP cannot be stably present at a temperature of 200°C or higher, and development of a solid electrolyte having higher thermal stability is required.

The present invention has been made based on the above circumstances, and an object of the present invention is to provide a solid electrolyte having high thermal stability and having a sufficient ionic conductivity even when exposed to a high temperature of 200°C or higher, a method of producing such a solid electrolyte, and an energy storage device using such a solid electrolyte.

### MEANS FOR SOLVING THE PROBLEMS

One aspect of the present invention made to solve the above problems is a solid electrolyte (α) containing lithium, phosphorus, sulfur, halogen, and an element A, in which the element A is at least one selected from the group consisting of magnesium, calcium, strontium, and barium, and the solid electrolyte has a crystal structure.

Another aspect of the present invention is a solid electrolyte (β) represented by the following Formula 1 and having a crystal structure.

(100-y)[xLi₂S•(1-x)P₂S5] •yAX₂•zY ••• 1

In the above Formula 1, A is at least one selected from the group consisting of Mg, Ca, Sr, and Ba. X is halogen. Y is one or more elements other than Li, P, S, Mg, Ca, Sr, Ba, and halogen, x is a number of 0.5 or more and 0.8 or less. y is a number more than 0 and 20 or less. z is a number of 0 or more and 25 or less.

Another aspect of the present invention is a method of producing a solid electrolyte, including: providing a composition containing lithium, phosphorus, sulfur, halogen, and an element A; reacting the composition to obtain an intermediate; and heating the intermediate, in which the element A is at least one selected from the group consisting of magnesium, calcium, strontium, and barium.

Another aspect of the present invention is an energy storage device containing the solid electrolyte (α) or the solid electrolyte (β).

Another aspect of the present invention is an electronic device including the energy storage device according to one aspect of the present invention.

Another aspect of the present invention is an automobile including the energy storage device according to one aspect of the present invention.

### ADVANTAGES OF THE INVENTION

According to one aspect of the present invention, it is possible to provide a solid electrolyte having high thermal stability and having a sufficient ionic conductivity even when exposed to a high temperature of 200°C or higher, a method of producing such a solid electrolyte, an energy storage device using such a solid electrolyte, an electronic device using such an energy storage device, and an automobile using such an energy storage device.

### BRIEF DESCRIPTION OF THE DRAWINGS

Fig. 1 is a schematic cross-sectional view of an all-solid-state battery as an embodiment of an energy storage device of the present invention.
Fig. 2 is a schematic view illustrating an energy storage apparatus configured by aggregating a plurality of energy storage devices according to an embodiment of the present invention.
Fig. 3 is an X-ray diffraction diagram of solid electrolytes of Examples 1-1 to 1-4.

### MODE FOR CARRYING OUT THE INVENTION

First, outlines of a solid electrolyte, a method of producing a solid electrolyte, an energy storage device, an electronic device, and an automobile disclosed in the present specification will be described.

The solid electrolyte according to an embodiment of the present invention is a solid electrolyte (α) containing lithium, phosphorus, sulfur, halogen, and an element A, in which the element A is at least one selected from the group consisting of magnesium, calcium, strontium, and barium, and has a crystal structure.

The solid electrolyte (α) has high thermal stability, and has a sufficient ionic conductivity even when exposed to a high temperature of 200°C or higher. Although the reason why such an effect occurs is not clear, the following reason is presumed. The solid electrolyte (α) further contains, as an element A, at least one selected from the group consisting of magnesium, calcium, strontium, and barium present as a divalent ion, as compared with a conventional solid electrolyte containing lithium, phosphorus, sulfur, and halogen, and having a crystal structure. Since the solid electrolyte (α) contains at least one selected from the group consisting of divalent magnesium ions, calcium ions, strontium ions, and barium ions in addition to monovalent lithium ions as cations, the thermal stability of the crystal structure of the solid electrolyte is enhanced, and it is presumed that the solid electrolyte (α) has a sufficient ionic conductivity even when exposed to a high temperature of 200°C or higher.

The crystal structure can be confirmed by powder X-ray diffraction measurement. More specifically, this means that a peak derived from the crystal structure of the solid electrolyte is observed in an X-ray diffraction diagram in powder X-ray diffraction measurement. The solid electrolyte may contain an amorphous part. The powder X-ray diffraction measurement is performed by the following procedure. An airtight sample holder for X-ray diffraction measurement is filled with a solid electrolyte powder to be measured in an argon atmosphere having a dew point of -50°C or lower. Powder X-ray diffraction measurement is performed using an X-ray diffractometer ("MiniFlex II" from Rigaku Corporation). A CuKα ray is used as a radiation source, a tube voltage is 30 kV, and a tube current is 15 mA. The diffracted X-ray passes through a Kβ filter having a thickness of 30 µm and is detected by a high-speed one-dimensional detector (model number: D/teX Ultra 2). A sampling width is 0.01°, a scanning speed is 5°/min, a divergence slit width is 0.625°, a light receiving slit width is 13 mm (OPEN), and a scattering slit width is 8 mm.

In the solid electrolyte (α), the ratio of the content of the element A to the content of phosphorus is preferably 0.08 or more in terms of molar ratio. When a sufficient amount of the element A is contained as described above, the thermal stability of the solid electrolyte is further enhanced, and a sufficient ionic conductivity can be exhibited even when the solid electrolyte is exposed to a higher temperature such as 240°C.

In the solid electrolyte (α), the ratio of the content of the element A to the content of lithium is preferably 0.03 or more in terms of molar ratio. Also in such a case, when a sufficient amount of the element A is contained, the thermal stability of the solid electrolyte is further enhanced, and a sufficient ionic conductivity can be exhibited even when the solid electrolyte is exposed to a higher temperature such as 240°C.

The solid electrolyte according to another embodiment of the present invention is a solid electrolyte (6) represented by the following Formula 1 and having a crystal structure.

(100-y)[xLi₂S• (1-x)P₂S5] •yAX₂•zY ••• 1

In the above Formula 1, A is at least one selected from the group consisting of Mg, Ca, Sr, and Ba. X is halogen. Y is one or more elements other than Li, P, S, Mg, Ca, Sr, Ba, and halogen, x is a number of 0.5 or more and 0.8 or less. y is a number more than 0 and 20 or less. z is a number of 0 or more and 25 or less.

The solid electrolyte (β) also has high thermal stability, and has a sufficient ionic conductivity even when exposed to a high temperature of 200°C or higher. Although the reason why such an effect is produced is not clear, it is presumed that as with the solid electrolyte (α), the presence of at least one selected from the group consisting of divalent magnesium ions, calcium ions, strontium ions, and barium ions enhances the thermal stability of the crystal structure in the solid electrolyte.

The solid electrolyte (α) and the solid electrolyte (6) preferably have diffraction peaks in a range of 19.9° ± 0.5° and a range of 23.6° ± 0.5° in the X-ray diffraction diagram using a CuKα ray. HICP has diffraction peaks in the range of 19.9° ± 0.5° and the range of 23.6° ± 0.5° in the X-ray diffraction diagram using a CuKα ray. Therefore, when the diffraction peak appears in the above range in the solid electrolyte (α) and the solid electrolyte (β), it can be said that HICP is formed, and high ionic conductivity can be exhibited. The "X-ray diffraction diagram using a CuKα ray" is obtained by the powder X-ray diffraction measurement described above.

In the solid electrolyte (α) and the solid electrolyte (β), an intensity ratio I_{H}/I_{β} of a diffraction peak intensity I_{H} in a range of 19.9° ± 0.5° to a diffraction peak intensity I_{β} in a range of 18.1° ± 0.5° in the X-ray diffraction diagram using a CuKα ray is preferably 0.2 or more. As described above, the diffraction peak in the range of 19.9° ± 0.5° is derived from the HICP. On the other hand, the diffraction peak in the range of 18.1° ± 0.5° is derived from a phase of β-Li₃PS₄, and when this phase is small, the ionic conductivity and thermal stability of the solid electrolyte are high. Therefore, when the intensity ratio I_{H}/I_{β} is 0.2 or more, the thermal stability of the solid electrolyte is higher, and the ionic conductivity is further improved when the solid electrolyte is exposed to a high temperature of 200°C or higher. In the X-ray diffraction diagram using a CuKα ray, when there is no diffraction peak in the range of 18.1° ± 0.5° and there is a diffraction peak in the range of 19.9° ± 0.5°, the intensity ratio I_{H}/I_{β} is infinite and is included in 0.2 or more.

In the solid electrolyte (α) and the solid electrolyte (6), a diffraction peak located in the range of 19.9° ± 0.5° in the X-ray diffraction diagram using a CuKα ray is preferably a diffraction peak having the strongest diffraction intensity, a diffraction peak having the second strongest diffraction intensity, a diffraction peak having the third strongest diffraction intensity, or a diffraction peak having the fourth strongest diffraction intensity, more preferably the diffraction peak having the strongest diffraction intensity, the diffraction peak having the second strongest diffraction intensity, or the diffraction peak having the third strongest diffraction intensity, and still more preferably the diffraction peak having the strongest diffraction intensity or the diffraction peak having the second strongest diffraction intensity. As described above, the diffraction peak in the range of 19.9° ± 0.5° is derived from the HICP. Therefore, in such a case, in the solid electrolyte (α) and the solid electrolyte (6), since it can be said that HICP is sufficiently formed, high ionic conductance can be exhibited.

In the solid electrolyte (α) and the solid electrolyte (β), the halogen is preferably one or more elements selected from the group consisting of fluorine, chlorine, bromine, and iodine.

The solid electrolyte (α) and the solid electrolyte (β) preferably contain iodine.

In the solid electrolyte (α) and the solid electrolyte (6), the ratio of the content of the iodine to the content of the halogen is preferably 0.1 or more and 1 or less in terms of molar ratio.

The solid electrolyte (α) and the solid electrolyte (β) preferably contain bromine.

In the solid electrolyte (α) and the solid electrolyte (β), the ratio of the total content of the iodine and the bromine to the content of the halogen is preferably 0.5 or more and 1 or less in terms of molar ratio.

The solid electrolyte (α) and the solid electrolyte (β) preferably contain iodine and bromine, and the ratio of the content of the bromine to the total content of the iodine and the bromine is preferably 0.1 or more and 0.9 or less in terms of molar ratio.

In the solid electrolyte (α) and the solid electrolyte (β), the ratio of the content of the lithium to the content of the phosphorus is preferably 1 or more and 5 or less in terms of molar ratio.

In the solid electrolyte (α) and the solid electrolyte (β), the ratio of the content of the sulfur to the content of the phosphorus is preferably 2 or more and 6 or less in terms of molar ratio.

In the solid electrolyte (α) and the solid electrolyte (6), the element A is preferably at least one selected from magnesium and calcium.

The solid electrolyte (α) and the solid electrolyte (β) preferably have an ionic conductance at 25°C of 1 mS/cm or more.

The method of producing a solid electrolyte according to an embodiment of the present invention is a method of producing a solid electrolyte, including: providing a composition containing lithium, phosphorus, sulfur, halogen, and an element A; reacting the composition to obtain an intermediate; and heating the intermediate, in which the element A is at least one selected from the group consisting of magnesium, calcium, strontium, and barium.

According to the production method, a solid electrolyte having high thermal stability and having a sufficient ionic conductivity even when exposed to a high temperature of 200°C or higher can be produced.

The "composition" means a mixture obtained by mixing two or more kinds of compounds or simple substances (hereinafter, the compound and the simple substance are also collectively referred to as "compound or the like"). It is sufficient if the entire composition, that is, any compound or the like contained in the composition contains lithium, phosphorus, sulfur, halogen, and the element A.

The energy storage device according to an embodiment of the present invention is an energy storage device containing the solid electrolyte (α) or the solid electrolyte (6). In the energy storage device, a solid electrolyte having high thermal stability and having a sufficient ionic conductivity even when exposed to a high temperature of 200°C or higher is used, and therefore, the energy storage device has an advantage that the upper limit of an operating temperature can be increased.

The electronic device according to one aspect of the present invention is an electronic device including the energy storage device according to one aspect of the present invention. Since the electronic device includes an energy storage device in which a solid electrolyte having high thermal stability and having a sufficient ionic conductivity even when exposed to a high temperature of 200°C or higher is used, good electronic device performance is exhibited.

An automobile according to one aspect of the present invention is an automobile including the energy storage device according to one aspect of the present invention. Since the automobile includes an energy storage device in which a solid electrolyte having high thermal stability and having a sufficient ionic conductivity even when exposed to a high temperature of 200°C or higher is used, good automobile performance is exhibited.

Hereinafter, a solid electrolyte, a method of producing a solid electrolyte, and an energy storage device according to an embodiment of the present invention will be sequentially described in detail.

### <Solid Electrolyte>

### (Crystal structure)

The solid electrolyte according to an embodiment of the present invention has a crystal structure. Examples of the crystal structure of the solid electrolyte include HICP, LGPS type, argyrodite type, Li₇P₃S₁₁, and Thio-LISICON type. Among these, the solid electrolyte preferably includes the HICP as a crystal structure from the point that high ionic conductivity can be exhibited. More specifically, the solid electrolyte preferably has diffraction peaks at a diffraction angle 2θ derived from the HICP in the range of 19.9° ± 0.5° and the range of 23.6° ± 0.5° in the X-ray diffraction diagram using a CuKα ray. The diffraction peak in the range of 19.9° ± 0.5° is more preferably present in a range of 19.9 ± 0.4°, and still more preferably present in a range of 19.9 ± 0.3°.

It is preferable that the solid electrolyte does not include a low ion conduction phase (LICP) having diffraction peaks at the diffraction angle 2θ in a range of 21.0° ± 0.5° and a range of 28.0° ± 0.5° in the X-ray diffraction diagram using a CuKα ray, or the LICP is relatively less than the HICP. In such a case, the ionic conductivity of the solid electrolyte is further enhanced. The LICP is usually a phase formed at a higher temperature than the HICP.

The solid electrolyte preferably has no diffraction peaks at the diffraction angle 2θ derived from the LICP in the range of 21.0° ± 0.5° and the range of 28.0° ± 0.5° in the X-ray diffraction diagram using a CuKα ray. In the X-ray diffraction diagram using a CuKα ray, the lower limit of an intensity ratio I_{H}/I_{L} of a diffraction peak intensity I_{H} at the diffraction angle 2θ derived from the HICP in the range of 19.9° ± 0.5° to a diffraction peak intensity I_{L} at the diffraction angle 2θ derived from the LICP in the range of 21.0° ± 0.5° is preferably 0.2, more preferably 0.5, still more preferably 1, and even more preferably 5 or 10. The intensity ratio I_{H}/I_{L} is related to an abundance ratio between the HICP and the LICP contained in the solid electrolyte. That is, a large intensity ratio I_{H}/I_{L} indicates that the amount of the LICP is relatively small with respect to the HICP. Since it may be most preferable that I_{L} is 0, the upper limit of the intensity ratio I_{H}/I_{L} is not particularly limited, and this upper limit may be, for example, 10,000, and may be 1,000 or 100. When I_{L} is 0, the intensity ratio I_{H}/I_{L} is infinite, and is included in 0.2 or more.

It is preferable that the solid electrolyte does not contain the phase of β-Li₃PS₄, or the phase of β-Li₃PS₄ is relatively less than the HICP. In such a case, the ionic conductivity and thermal stability of the solid electrolyte are further enhanced.

The phase of β-Li₃PS₄ has the diffraction peak at the diffraction angle 2θ in the range of 18.1° ± 0.5° in the X-ray diffraction diagram using a CuKα ray. Therefore, the solid electrolyte preferably has no diffraction peak at the diffraction angle 2θ in the range of 18.1° ± 0.5° in the X-ray diffraction diagram using a CuKα ray. In the X-ray diffraction diagram using a CuKα ray, the lower limit of an intensity ratio I_{H}/I_{β} of the diffraction peak intensity I_{H} at the diffraction angle 2θ derived from the HICP in the range of 19.9° ± 0.5° to the diffraction peak intensity I_{β} at the diffraction angle 2θ derived from the phase of β-Li₃PS₄ in the range of 18.1° ± 0.5° is preferably 0.2, more preferably 0.5, still more preferably 1, and even more preferably 2, 3, or 5. The intensity ratio I_{H}/I_{β} is related to an abundance ratio between the HICP and the phase of β-Li₃PS₄ contained in the solid electrolyte. That is, a large intensity ratio I_{H}/I_{β} indicates that the amount of the phase of β-Li₃PS₄ is relatively small with respect to the HICP. Since it is most preferable that I_{β} is 0, the upper limit of the intensity ratio I_{H}/I_{β} is not particularly limited. When I_{β} is 0, the intensity ratio I_{H}/I_{β} is infinite, and is included in 0.2 or more.

### (Composition)

The solid electrolyte (α) according to an embodiment of the present invention contains lithium, phosphorus, sulfur, halogen, and the element A. The element A is at least one selected from the group consisting of magnesium, calcium, strontium, and barium, preferably at least one selected from magnesium and calcium, and more preferably magnesium. When the element A is magnesium, the thermal stability is further enhanced, and a sufficient ionic conductivity can be exhibited even at the time of exposure to a higher temperature such as 240°C. Although the reason for this is not clear, since magnesium has a higher electronegativity than other elements A such as calcium, it is presumed that a strong bond with halogen is formed and the thermal stability of the crystal structure in the solid electrolyte is enhanced. Examples of the halogen include chlorine, bromine, and iodine, bromine and iodine are more preferable, and iodine may be further preferable.

In the solid electrolyte (α), the lower limit of the ratio (A/P) of the content of the element A to the content of phosphorus may be, for example, 0.01 in terms of molar ratio, and is preferably 0.05, more preferably 0.08, and still more preferably 0.10. By setting the content ratio (A/P) to be equal to or more than the lower limit, the thermal stability of the crystal structure such as the HICP is enhanced, so that a sufficient ionic conductivity is obtained even at the time of exposure to a high temperature of 200°C or higher, and this leads to an increased tendency to maintain a sufficient ionic conductivity even at the time of exposure to a higher temperature such as 240°C. The upper limit of the content ratio (A/P) is, for example, 0.5, preferably 0.4, more preferably 0.3, and may be still more preferably 0.2 or 0.15. By setting the content ratio (A/P) to be equal to or less than the upper limit, a content ratio of lithium ions in all cations tends to be relatively increased, leading to enhancement of the ionic conductivity. The content ratio (A/P) may be equal to or more than any of the above lower limits and equal to or less than any of the above upper limits.

The ratio (Li/P) of the content of lithium to the content of phosphorus is preferably 1 or more and 5 or less in terms of molar ratio, more preferably 2 or more and 4 or less, and still more preferably 2.5 or more and 3.5 or less. By setting the content ratio (Li/P) to be equal to or more than the lower limit, the HICP is easily precipitated. By setting the content ratio (Li/P) to be equal to or less than the upper limit, precipitation of Li₂S tends to be suppressed, leading to enhancement of atmospheric stability and the like.

The ratio (S/P) of the content of sulfur to the content of phosphorus is preferably 2 or more and 6 or less in terms of molar ratio, more preferably 3 or more and 5 or less, and still more preferably 3.5 or more and 4.5 or less. By setting the content ratio (S/P) within the above range, the HICP is easily precipitated, and the ionic conductivity is enhanced.

The ratio (X/P) of the content of halogen (X) to the content of phosphorus is preferably 0.1 or more and 1 or less in terms of molar ratio, more preferably 0.2 or more and 0.8 or less, may be still more preferably 0.3 or more and 0.4 or less, and may be even more preferably 0.3 or less. By setting the content ratio (X/P) to be equal to or more than the lower limit, the HICP is easily precipitated, and the ionic conductivity may be enhanced. Furthermore, by setting the content ratio (X/P) to be equal to or less than the upper limit, the crystal phase of lithium halide is less likely to remain, and the ionic conductivity may be enhanced.

The solid electrolyte (α) may further contain elements other than lithium, phosphorus, sulfur, halogen, and the element A. Examples of other elements include nitrogen, aluminum, boron, silicon, and the like. However, the ratio of the content of the other elements to the content of phosphorus in the solid electrolyte (α) may be preferably, for example, less than 0.1 in terms of molar ratio, and more preferably less than 0.01, and the solid electrolyte may not substantially contain the other element.

In the solid electrolyte (α), the lower limit of the ratio (A/Li) of the content of the element A to the content of lithium may be, for example, 0.01 in terms of molar ratio, and is preferably 0.02, more preferably 0.03, and still more preferably 0.035. By setting the content ratio (A/Li) to be equal to or more than the lower limit, the thermal stability of the crystal structure such as the HICP is enhanced, so that a sufficient ionic conductivity is obtained even at the time of exposure to a high temperature of 200°C or higher, and this leads to an increased tendency to maintain a sufficient ionic conductivity even at the time of exposure to a higher temperature such as 240°C. The upper limit of the content ratio (A/Li) is, for example, 0.2, preferably 0.15, more preferably 0.1, still more preferably 0.08, and may be even more preferably 0.05. By setting the content ratio (A/Li) to be equal to or less than the upper limit, the content ratio of lithium ions in all cations tends to be relatively increased, leading to enhancement of the ionic conductivity. The content ratio (A/Li) may be equal to or more than any of the above lower limits and equal to or less than any of the above upper limits.

The solid electrolyte (β) according to an embodiment of the present invention is represented by the following Formula 1:

(100-y)[xLi₂S• (1-x)P₂S₅] •yAX₂•zY ••• 1

In the above Formula 1, A is at least one selected from the group consisting of Mg, Ca, Sr, and Ba. X is halogen. Y is one or more elements other than Li, P, S, Mg, Ca, Sr, Ba, and halogen, x is a number of 0.5 or more and 0.8 or less. y is a number more than 0 and 20 or less. z is a number of 0 or more and 25 or less.

The above formula 1 represents the content ratio of elements Li, P, S, A, X, and Y in the solid electrolyte (composition formula), and does not specify a compound as a raw material.

As the A, at least one selected from Mg and Ca is preferable, and Mg is more preferable.

Examples of the X include Cl, Br, and I, and I is preferable.

Examples of the Y include N, Al, B, and Si.

The x is preferably 0.6 or more and 0.78 or less, and more preferably 0.7 or more and 0.76 or less.

The y is preferably 1 or more and 20 or less, more preferably 4 or more and 15 or less, still more preferably 4.5 or more and 12 or less, even more preferably 5 or more and 10 or less, and may be further more preferably 5.5 or less.

The z may be 0 or more and 5 or less, 0 or more and 1 or less, or 0.

When the solid electrolyte (β) includes the composition represented by the above Formula 1, the thermal stability of the crystal structure such as the HICP is improved, and the solid electrolyte can maintain a sufficient ionic conductivity even when exposed to a high temperature of 200°C or higher.

The solid electrolyte preferably contains at least I. When the solid electrolyte including the HICP contains I, the ionic conductance tends to increase. Thus, when the solid electrolyte contains I, the ionic conductance may be further improved.

The solid electrolyte preferably contains Br. When the solid electrolyte including the HICP contains Br, the ionic conductance may increase. Thus, when the solid electrolyte contains Br, the ionic conductance may be further improved.

The solid electrolyte more preferably contains Br and I. When the solid electrolyte including the HICP contains Br and I, the ionic conductance tends to increase. Thus, when the solid electrolyte contains Br and I, the ionic conductance may be further improved.

In the solid electrolyte, the lower limit of a molar ratio (I/X) of the content of I to the content of halogen is preferably more than 0, more preferably 0.1 or more, still more preferably 0.2 or more, and may be even more preferably 0.3 or more. By setting the lower limit of the molar ratio (I/X) in this manner, the HICP is likely to be precipitated, and the ionic conductance may increase. The upper limit of the molar ratio (I/X) may be 1.0, 0.9, 0.8, or 0.7. By setting the upper limit of the molar ratio (I/X) to be equal to or less than the upper limit, the HICP is likely to be precipitated, and the ionic conductance may increase.

In the solid electrolyte, the lower limit of a molar ratio ((Br+I)/X) of the total content of Br and I to the content of halogen is preferably 0.5 or more, more preferably 0.6 or more, still more preferably 0.7 or more, and may be even more preferably 0.8 or more. By setting the lower limit of the molar ratio ((Br+I)/X) in this manner, the HICP is likely to be precipitated, and the ionic conductance may increase. The upper limit of the molar ratio ((Br+I)/X) may be, for example, 1.0.

When the solid electrolyte contains Br and I, the lower limit of the molar ratio (Br/(Br+I)) of Br to the total content of Br and I may be more than 0, and is preferably 0.1 or more, more preferably 0.2 or more, and still more preferably 0.3 or more. By setting the lower limit of the molar ratio (Br/(Br+I)) in this manner, the HICP is likely to be precipitated, and the ionic conductance may increase. The upper limit of the molar ratio (Br/(Br+I)) may be less than 1.0, 0.9 or less, 0.8 or less, or 0.7 or less. By setting the upper limit of the molar ratio (Br/(Br+I)) in this manner, the HICP is likely to be precipitated, and the ionic conductance may increase.

The halogen in the solid electrolyte is preferably composed of only I or composed of only Br and I. When the halogen in the solid electrolyte includes such a composition, the HICP is likely to be precipitated, and the ionic conductance may increase.

### (Physical properties, applications, and the like)

The lower limit of the ionic conductance of the solid electrolyte at 25°C is preferably 0.5 mS/cm, more preferably 1 mS/cm, and still more preferably 2 mS/cm. When the ionic conductance of the solid electrolyte at 25°C is equal to or more than the lower limit, the charge-discharge performance of the energy storage device including a sulfide solid electrolyte can be further improved. The upper limit of the ionic conductance is not particularly limited, and may be, for example, 20 mS/cm or 10 mS/cm.

The ionic conductivity of the solid electrolyte is determined by measuring an alternating-current impedance by the following method. Under an argon atmosphere having a dew point of -50°C or lower, 120 mg of the sample powder is put into a powder molder of 10 mm in inner diameter, and then subjected to uniaxial pressing at 50 MPa or less with the use of a hydraulic press. After pressure release, 120 mg of SUS316L powder as a current collector is put on an upper surface of the sample, and then subjected to uniaxial pressing at 50 MPa or less with the use of the hydraulic press again. Next, 120 mg of SUS316L powder as a current collector is put on a lower surface of the sample, and then subjected to uniaxial pressing at 360 MPa for 5 minutes to obtain a pellet for ionic conductance measurement. This pellet for ionic conductance measurement is inserted into an HS cell from Hohsen Corp. to measure the alternating-current impedance at a predetermined temperature. The measurement conditions are an applied voltage amplitude of 20 mV, a frequency range of 1 MHz to 100 mHz, and a measurement temperature of 25°C.

The shape of the solid electrolyte is not particularly limited, and is usually granular, massive, or the like. The solid electrolyte can be suitably used as an electrolyte of an energy storage device such as a lithium ion secondary battery, particularly a lithium ion energy storage device. Among them, the solid electrolyte can be particularly suitably used as an electrolyte of an all-solid-state battery. The solid electrolyte can be used for any of a positive electrode layer, an isolation layer, a negative electrode layer and the like in the energy storage device.

### <Method of producing solid electrolyte>

The method of producing a solid electrolyte according to an embodiment of the present invention is not particularly limited, but the following method is preferable. That is, the method of producing a solid electrolyte according to an embodiment of the present invention includes: providing a composition containing lithium, phosphorus, sulfur, halogen, and an element A (provision step); reacting the composition to obtain an intermediate (reaction step); and heating the intermediate (heating step), in which the element A is at least one selected from the group consisting of magnesium, calcium, strontium, and barium.

### (Provision step)

In this step, a composition containing lithium, phosphorus, sulfur, halogen, and the element A is provided. The composition is usually a mixture of two or more compounds containing at least one element of lithium, phosphorus, sulfur, halogen, and the element A. It is sufficient if any compound or the like contained in the composition (mixture) contains lithium, phosphorus, sulfur, halogen, and the element A. Two or more elements of lithium, phosphorus, sulfur, halogen, and the element A may be contained in one compound. Examples of the compound containing lithium and sulfur include Li₂S described later, examples of the compound containing phosphorus and sulfur include P₂S₅ described later, and examples of the compound containing halogen and the element A include halides of the element A described later. The composition may contain a compound or the like that does not contain any element of lithium, phosphorus, sulfur, halogen, and the element A.

Examples of the compound or the like containing lithium include Li₂S, Li₂O, LisN, Li₂CO₃, and metallic lithium. In addition, lithium halide described later or the like may be used. Among these, Li₂S is preferable. The compound or the like containing lithium may be used singly, or two or more thereof may be used in mixture.

Examples of the compound or the like containing phosphorus include P₂S₃, P₂S₅, P₂O₅, P₃N₅, and elemental phosphorus. Among these, P₂S₃ and P₂S₅ are preferable, and P₂S₅ is more preferable. The compound or the like containing phosphorus may be used singly, or two or more thereof may be used in mixture.

Examples of the compound or the like containing sulfur include Li₂S, P₂S₃, P₂S₅, Al₂S₃, MgS, SiS₂, and elemental sulfur. Among these, Li₂S, P₂S₃ and P₂S₅ are preferable, and Li₂S and P₂S₅ are more preferable. The compound or the like containing sulfur may be used singly, or two or more thereof may be used in mixture.

Examples of the compound or the like containing halogen include halides (AX₂) of the element A (at least one selected from the group consisting of magnesium, calcium, strontium, and barium), and include LiCl, LiBr, LiI, MgCl₂, MgBr₂, MgI₂, CaCl₂, CaBr₂, CaI₂, SrCl₂, SrBr₂, SrI₂, BaCl₂, BaBr₂, and BaI₂. Among these, MgCl₂, MgBr₂, MgI₂, CaCl₂, CaBr₂, and CaI₂ are preferable, and MgCl₂, MgBr₂, and MgI₂ are more preferable. The compound or the like containing halogen may be used singly, or two or more thereof may be used in mixture.

Examples of the compound or the like containing the element A (at least one selected from the group consisting of magnesium, calcium, strontium, and barium) include halides (AX₂) of the element A, MgO, CaO, SrO, BaO, MgS, and Mg₃N₂. Among these, MgCl₂, MgBr₂, MgI₂, CaCl₂, CaBr₂, and CaI₂ are preferable, and MgCl₂, MgBr₂, and MgI₂ are more preferable. The compound or the like containing the element A may be used singly, or two or more thereof may be used in mixture.

For example, as an embodiment, the composition may be a mixture of Li₂S, P₂S₅, and AX₂ (halide of the element A).

The specific content and suitable content of elements (lithium, phosphorus, sulfur, halogen, and the element A) in the composition are the same as the specific content and suitable content of elements (lithium, phosphorus, sulfur, halogen, and the element A) in the solid electrolyte according to an embodiment of the present invention described above. However, it is preferable that the ratio (A/P) of the content of the element A to the content of phosphorus in the composition is 0.08 or more in terms of molar ratio, or the ratio (A/Li) of the content of the element A to the content of lithium is 0.03 or more in terms of molar ratio. By synthesizing the solid electrolyte using a composition containing such an amount of the element A, the thermal stability of the crystal structure is enhanced, and a solid electrolyte having sufficient ionic conductivity is obtained even when exposed to a high temperature of 200°C or higher (for example, 240°C). In addition, the composition may further contain elements other than lithium, phosphorus, sulfur, halogen, and the element A. The specific examples and suitable contents of other elements in the composition are the same as the specific examples and suitable contents of other elements in the solid electrolyte according to an embodiment of the present invention described above.

### (Reaction step)

In this step, the composition containing lithium, phosphorus, sulfur, halogen, and the element A is reacted, for example, by performing mechanical milling on the composition to obtain an intermediate. The means for obtaining the intermediate is not limited thereto, and the intermediate may be obtained by other methods. For example, instead of mechanical milling, a melt quenching method or the like may be performed.

The mechanical milling may be either dry or wet, but is preferably wet because the raw material compounds and the like can be more uniformly mixed. Examples of the mechanical milling include case-driven mills, medium stirring mills, milling with a high-speed rotary crusher, roller mills, and jet mills. Examples of the case-driven mill include rotary mills, vibration mills, and planetary mills. Examples of the medium stirring mill include attritors and bead mills. Examples of the milling with a high-speed rotary crusher include hammer mills and pin mills. Among these, the case-driven mills are preferable, and the planetary mills are particularly preferable.

The intermediate obtained in the reaction step may have a crystal structure, but is preferably a so-called sulfide glass. The "sulfide glass" means a sulfide solid electrolyte including an amorphous structure. When the intermediate is sulfide glass, a sulfide solid electrolyte with less crystal phase with low stability such as Li₂S, in which elements are highly dispersed, can be obtained.

### (Heating step)

In this step, the intermediate is heated (heat-treated). Thereby, a solid electrolyte in which at least a part of the intermediate is crystallized, preferably crystallized into the HICP is obtained. The heating (heat treatment) may be performed under a reduced pressure atmosphere or an inert gas atmosphere. The heating temperature range is, for example, preferably 160°C or higher and lower than 260°C, more preferably 180°C or higher and 255°C or lower, still more preferably 200°C or higher and 250°C or lower, and may be even more preferably 220°C. By setting the heating temperature to be equal to or more than the lower limit, crystallization sufficiently proceeds, and a solid electrolyte with higher ionic conductivity is obtained. By setting the heating temperature to be equal to or less than the upper limit, precipitation of LICP is suppressed, and a solid electrolyte with higher ionic conductivity is obtained.

### <Energy storage device>

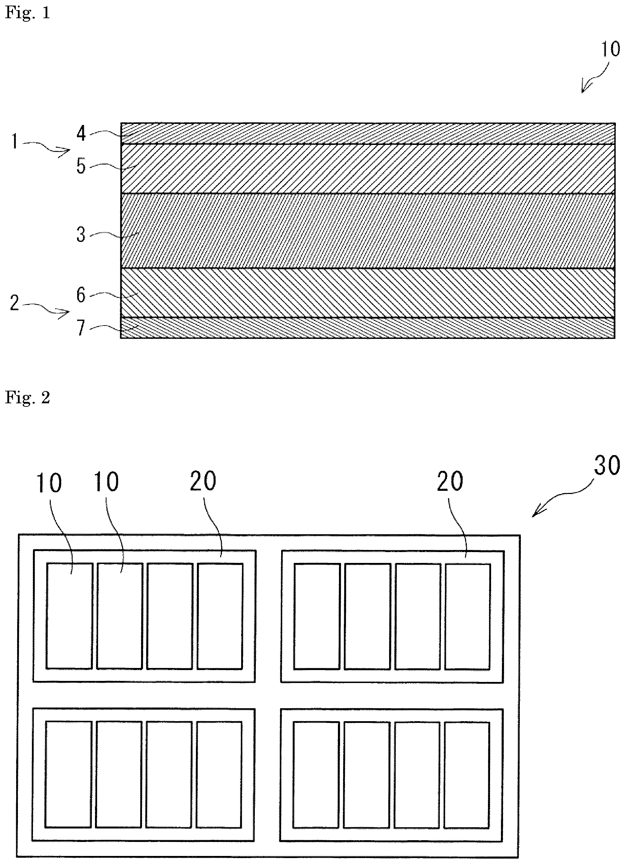

Hereinafter, as an embodiment of the energy storage device of the present invention, an all-solid-state battery will be described as a specific example. An energy storage device 10 shown Fig. 1 is an all-solid-state battery, and is a secondary battery in which a positive electrode layer 1 and a negative electrode layer 2 are arranged with an isolation layer 3 interposed therebetween. The positive electrode layer 1 includes a positive electrode substrate 4 and a positive active material layer 5, and the positive electrode substrate 4 is an outermost layer of the positive electrode layer 1. The negative electrode layer 2 includes a negative electrode substrate 7 and a negative active material layer 6, and the negative electrode substrate 7 is an outermost layer of the negative electrode layer 2. In the energy storage device 10 shown in Fig. 1, the negative active material layer 6, the isolation layer 3, the positive active material layer 5, and the positive electrode substrate 4 are stacked in this order on the negative electrode substrate 7.

The energy storage device 10 contains the solid electrolyte according to an embodiment of the present invention in at least one of the positive electrode layer 1, the negative electrode layer 2, and the isolation layer 3. More specifically, the solid electrolyte according to an embodiment of the present invention is contained in at least one of the positive active material layer 5, the negative active material layer 6, and the isolation layer 3. Since the energy storage device 10 contains the solid electrolyte having a sufficient ionic conductivity and excellent thermal stability, there is an advantage that the upper limit of the operating temperature can be increased.

The energy storage device 10 may also use a solid electrolyte other than the solid electrolyte according to an embodiment of the present invention. Examples of other solid electrolytes include sulfide-based solid electrolytes, oxide-based solid electrolytes, dry polymer electrolytes, gel polymer electrolytes, and pseudo solid electrolytes other than the solid electrolyte, and the sulfide-based solid electrolytes are preferable. In addition, a plurality of different types of solid electrolytes may be contained in one layer of the energy storage device 10, or different solid electrolytes may be contained in each layer.

Examples of the sulfide-based solid electrolyte include Li₂S-P₂S₅, Li₂S-P₂S₅-LiI, Li₂S-P₂S₅-LiCl, Li₂S-P₂S₅-LiBr, Li₂S-P₂S₅-Li₂O, Li₂S-P₂S₅-Li₂O-LiI, Li₂S-P₂S₅-Li₃N, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂SSiS₂-P₂S₅-LiI, Li₂S-B₂S₃, Li₂S-P₂S₅-ZₘS₂ₙ (provided that m and n are positive numbers, and Z is any of Ge, Zn, and Ga), Li₂S-GeS₂, Li₂S-SiS₂-Li₃PO₄, Li₂S-SiS₂-LiₓMO_{y} (provided that x and y are positive numbers, and M is any of P, Si, Ge, B, Al, Ga, and In), and Li₁₀GeP₂S₁₂.

### [Positive electrode layer]

The positive electrode layer 1 includes the positive electrode substrate 4 and the positive active material layer 5 stacked on a surface of the positive electrode substrate 4. The positive electrode layer 1 may have an intermediate layer between the positive electrode substrate 4 and the positive active material layer 5. The intermediate layer can be, for example, a layer containing a conductive agent and a binder.

### (Positive electrode substrate)

The positive electrode substrate 4 has conductivity. Whether the positive substrate exhibits "conductivity" is determined by the volume resistivity of 10⁷ Ω·cm measured in conformity with JIS-H-0505 (1975) as a threshold. As the material of the positive electrode substrate 4, a metal such as aluminum, titanium, tantalum, indium, or stainless steel, or an alloy thereof is used. Among these, aluminum or an aluminum alloy is preferable from the viewpoint of electric potential resistance, high conductivity, and costs. Examples of the positive electrode substrate 4 include a foil and a deposited film, and a foil is preferable from the viewpoint of costs. Accordingly, the positive electrode substrate 4 is preferably an aluminum foil or an aluminum alloy foil. Examples of aluminum and the aluminum alloy include A1085P and A3003P specified in JIS-H-4000 (2014).

The average thickness of the positive electrode substrate 4 is preferably 3 µm or more and 50 µm or less, more preferably 5 µm or more and 40 µm or less, still more preferably 8 µm or more and 30 µm or less, and particularly preferably 10 µm or more and 25 µm or less. When the average thickness of the positive electrode substrate 4 is within the above-described range, it is possible to enhance the energy density per volume of the energy storage device 10 while increasing the strength of the positive electrode substrate 4. The "average thickness" of the positive electrode substrate 4 and the negative electrode substrate 7 described later refers to a value obtained by dividing the mass of a substrate having a predetermined area by the true density and area of the substrate.

The intermediate layer is a layer arranged between the positive electrode substrate 4 and the positive active material layer 5. The intermediate layer contains a conductive agent such as carbon particles to reduce contact resistance between the positive electrode substrate 4 and the positive active material layer 5. The configuration of the intermediate layer is not particularly limited, and includes, for example, a binder and a conductive agent.

### (Positive active material layer)

The positive active material layer 5 contains a positive active material. The positive active material layer 5 can be formed of a so-called positive electrode mixture containing a positive active material. The positive active material layer 5 may contain a mixture or a composite containing a positive active material and a solid electrolyte. The positive active material layer 5 may contain optional components such as a conductive agent, a binder (binding agent), a thickener, a filler, and the like as necessary. One or two or more of these optional components may not be substantially contained in the positive active material layer 5.

The positive active material contained in the positive active material layer 5 can be appropriately selected from known positive active materials usually used for lithium ion secondary batteries and all-solid-state batteries. As the positive active material, a material capable of occluding and releasing lithium ions is usually used. Examples of the positive active material include lithium transition metal composite oxides having an α-NaFeO₂-type crystal structure, lithium transition metal composite oxides having a spinel-type crystal structure, polyanion compounds, chalcogenides, and sulfur. Examples of the lithium transition metal composite oxide having an α-NaFeO₂-type crystal structure include Li[LiₓNi₁₋ₓ]O₂ (0 ≤ x < 0.5), Li[LiₓNi_{γ}Co_{(1-x-γ)}]O₂ (0 ≤ x < 0.5, 0 < y < 1), Li[LiₓNi_{γ}Mn_{β}Co_{(1-x-γ-β}]O₂ (0 ≤ x < 0.5, 0 < y, 0 < B, 0.5 < γ+β < 1). Examples of the lithium transition metal composite oxide having a spinel-type crystal structure include LiₓMn₂O₄ and LiₓNi_{γ}Mn_{(2-γ)}O₄. Examples of the polyanion compounds include LiFePO₄, LiMnPO₄, LiNiPO₄, LiCoPO₄, Li₃V₂(PO₄)₃, Li₂MnSiO₄, and Li₂CoPO₄F. Examples of the chalcogenides include titanium disulfide, molybdenum disulfide, and molybdenum dioxide. Apart of atoms or polyanions in these materials may be substituted with atoms or anion species composed of other elements. A surface of the positive active material may be coated with an oxide such as lithium niobate, lithium titanate, or lithium phosphate. In the positive active material layer, one of these positive active materials may be used singly, or two or more of these positive active materials may be mixed and used.

The positive active material is typically particles (powder). The average particle size of the positive active material is preferably 0.1 µm or more and 20 µm or less, for example. By setting the average particle size of the positive active material to be equal to or more than the lower limit, the positive active material is easily manufactured or handled. By setting the average particle size of the positive active material to be equal to or less than the upper limit, the electron conductivity of the positive active material layer 5 is improved. In this regard, the term "average particle size" means a value at which a volume-based integrated distribution calculated in accordance with JIS-Z-8819-2 (2001) is 50% based on a particle size distribution measured by a laser diffraction/scattering method for a diluted solution obtained by diluting particles with a solvent in accordance with JIS-Z-8825 (2013).

A crusher, a classifier, and the like are used to obtain the particles in a predetermined shape. Examples of the crushing method include a method in which a mortar, a ball mill, a sand mill, a vibratory ball mill, a planetary ball mill, a jet mill, a counter jet mill, a whirling airflow type jet mill, a sieve or the like is used. At the time of crushing, wet type crushing in the presence of water or an organic solvent such as hexane can also be used. As a classification method, a sieve, a pneumatic classifier and the like are used both in dry manner and in wet manner if necessary.

The content of the positive active material in the positive active material layer 5 is preferably 10% by mass or more and 95% by mass or less, more preferably 30% by mass or more, and still more preferably 50% by mass or more. By setting the content of the positive active material within the above range, the electric capacity of the energy storage device 10 can be further increased.

When the positive active material layer 5 contains a solid electrolyte, the content of the solid electrolyte is preferably 5% by mass or more and 90% by mass or less, more preferably 15% by mass or more and 70% by mass or less, and may be still more preferably 20% by mass or more and 50% by mass or less. By setting the content of the solid electrolyte within the above range, the electric capacity of the energy storage device 10 can be increased. When the solid electrolyte according to an embodiment of the present invention is used for the positive active material layer 5, the content of the solid electrolyte according to an embodiment of the present invention in an all solid electrolyte in the positive active material layer 5 is preferably 50% by mass or more, more preferably 70% by mass or more, still more preferably 90% by mass or more, and even more preferably substantially 100% by mass.

A mixture of the positive active material, the solid electrolyte, and the like is a mixture prepared by mixing the positive active material, the solid electrolyte, and the like by mechanical milling or the like. For example, the mixture of the positive active material, the solid electrolyte, and the like can be obtained by mixing a particulate positive active material, a particulate solid electrolyte, and the like. Examples of the composite of the positive active material, the solid electrolyte, and the like include a composite having a chemical or physical bond between the positive active material and the solid electrolyte or the like, and a composite obtained by mechanically combining the positive active material and the solid electrolyte or the like. The composite includes the positive active material, the solid electrolyte, and the like present in one particle, and examples thereof include those in which the positive active material, the solid electrolyte, and the like form an aggregated state, and those in which a film containing the solid electrolyte or the like is formed on at least a part of a surface of the positive active material.

The conductive agent is not particularly limited as long as it is a material exhibiting electrical conductivity. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the shape of the conductive agent include a powdery shape and a fibrous shape. As the conductive agent, one of these materials may be used singly, or two or more thereof may be used in mixture. These materials may be composited and used. For example, a material obtained by compositing carbon black with CNT may be used. Among these materials, carbon black is preferable from the viewpoint of electron conductivity and coatability, and in particular, acetylene black is preferable.

The content of the conductive agent in the positive active material layer 5 is preferably 1% by mass or more and 10% by mass or less, more preferably 3% by mass or more and 9% by mass or less. By setting the content of the conductive agent within the above range, the electric capacity of the energy storage device 10 can be increased.

Examples of the binder include: thermoplastic resins such as fluororesin (polytetrafluoroethylene (PTFE), polyvinylidene fluoride (PVDF), etc.), polyethylene, polypropylene, and polyimide; elastomers such as ethylene-propylene-diene rubber (EPDM), sulfonated EPDM, styrenebutadiene rubber (SBR), and fluororubber; and polysaccharide polymers.

The content of the binder in the positive active material layer 5 is preferably 1% by mass or more and 10% by mass, and more preferably 3% by mass or more and 9% by mass or less. When the content of the binder is in the above range, the positive active material can be stably held.

Examples of the thickener include polysaccharide polymers such as carboxymethylcellulose (CMC) and methylcellulose. When the thickener includes a functional group that is reactive with lithium and the like, the functional group may be deactivated by methylation or the like in advance.

The filler is not particularly limited. Examples of the filler include polyolefins such as polypropylene and polyethylene, inorganic oxides such as silicon dioxide, aluminum oxide, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, barium sulfate and the like, nitrides such as aluminum nitride and silicon nitride, and substances derived from mineral resources, such as talc, montmorillonite, boehmite, zeolite, apatite, kaolin, mullite, spinel, olivine, sericite, bentonite and mica, and artificial products thereof.

The positive active material layer 5 may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Nb, or W as a component other than the positive active material, the conductive agent, the binder, the thickener, and the filler.

The average thickness of the positive active material layer 5 is preferably 30 µm or more and 1,000 µm or less, and more preferably 60 µm or more and 500 µm or less. By setting the average thickness of the positive active material layer 5 to be equal to or more than the lower limit, an energy storage device 10 having a high energy density can be obtained. By setting the average thickness of the positive active material layer 5 to be equal to or less than the upper limit, the size of the energy storage device 10 can be reduced. The average thickness of the positive active material layer 5 is regarded as an average value of thicknesses measured at any five points. The same applies to the average thickness of the negative active material layer 6 and the isolation layer 3 described later.

### [Negative electrode layer]

The negative electrode layer 2 has the negative electrode substrate 7 and the negative active material layer 6 disposed on the negative electrode substrate 7 directly or via an intermediate layer. The configuration of the intermediate layer is not particularly limited, and for example can be selected from the configurations exemplified for the positive electrode layer 1.

### (Negative electrode substrate)

The negative electrode substrate 7 exhibits conductivity. As the material of the negative electrode substrate 7, a metal such as copper, nickel, stainless steel, nickel-plated steel, or aluminum, or an alloy thereof is used. Among these, copper or a copper alloy is preferable. Examples of the negative electrode substrate include a foil and a vapor deposited film, and a foil is preferable from the viewpoint of cost. Therefore, the negative electrode substrate is preferably a copper foil or a copper alloy foil. Examples of the copper foil include a rolled copper foil and an electrolytic copper foil.

The average thickness of the negative electrode substrate 7 is preferably 2 µm or more and 35 µm or less, more preferably 3 µm or more and 30 µm or less, still more preferably 4 µm or more and 25 µm or less, and particularly preferably 5 µm or more and 20 µm or less. By setting the average thickness of the negative electrode substrate 7 to be equal to or more than the lower limit, the strength of the negative electrode substrate 7 can be increased. By setting the average thickness of the negative electrode substrate 7 to be equal to or less than the upper limit, the energy density per volume of the energy storage device 10 can be increased.

### (Negative active material layer)

The negative active material layer 6 contains a negative active material. The negative active material layer 6 can be formed of a so-called negative electrode mixture containing a negative active material. The negative active material layer 6 may contain a mixture or a composite containing a negative active material and a solid electrolyte. The negative active material layer 6 contains optional components such as a conductive agent, a binder, a thickener, a filler, or the like as necessary. The types and suitable contents of the optional components in the negative active material layer 6 are the same as those of the optional components in the positive active material layer 5 described above. One or two or more of these optional components may not be substantially contained in the negative active material layer 6.

The negative active material layer 6 may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Ta, Hf, Nb, or W as a component other than the negative active material, the conductive agent, the binder, the thickener, and the filler.

The negative active material can be appropriately selected from known negative active materials usually used for lithium ion secondary batteries and all-solid-state batteries. As the negative active material, a material capable of occluding and releasing lithium ions is usually used. Examples of the negative active material include metallic Li; metals or metalloids such as Si and Sn; metal oxides or metalloid oxides such as an Si oxide, a Ti oxide, and an Sn oxide; titanium-containing oxides such as Li₄Ti₅O₁₂, LiTiO₂, and TiNb₂O₇; a polyphosphoric acid compound; silicon carbide; and carbon materials such as graphite and non-graphitic carbon (easily graphitizable carbon or hardly graphitizable carbon). Among these materials, graphite and non-graphitic carbon are preferable. In the negative active material layer 6, one of these materials may be used singly, or two or more of these materials may be used in mixture.

The term "graphite" refers to a carbon material in which an average lattice spacing (d₀₀₂) of a (002) plane determined by X-ray diffraction before charge-discharge or in a discharged state is 0.33 nm or more and less than 0.34 nm. Examples of the graphite include natural graphite and artificial graphite. Artificial graphite is preferable from the viewpoint that a material having stable physical properties can be procured.

The term "non-graphitic carbon" refers to a carbon material in which the average lattice spacing (d₀₀₂) of a (002) plane determined by X-ray diffraction before charge-discharge or in the discharged state is 0.34 nm or more and 0.42 nm or less. Examples of the non-graphitic carbon include hardly graphitizable carbon and easily graphitizable carbon. Examples of the non-graphitic carbon include a material derived from resin, a material derived from petroleum pitch, and a material derived from alcohol.

In this regard, the "discharged state" means a state discharged so that lithium ions that can be stored and released in association with charge-discharge are sufficiently released from the carbon material as the negative active material. For example, the "discharged state" refers to a state where an open circuit voltage is 0.7 V or more in a monopolar battery in which a negative electrode containing a carbon material as a negative active material is used as a working electrode and metal Li is used as a counter electrode. Since the potential of the metallic Li counter electrode in an open circuit state is substantially equal to an oxidation/reduction potential of Li, the open circuit voltage in the unipolar battery is substantially equal to the potential of the negative electrode containing the carbon material with respect to the oxidation/reduction potential of Li.

The term "hardly graphitizable carbon" refers to a carbon material in which the d₀₀₂ is 0.36 nm or more and 0.42 nm or less.

The term "easily graphitizable carbon" refers to a carbon material in which the d₀₀₂ is 0.34 nm or more and less than 0.36 nm.

The negative active material is typically particles (powder). The average particle size of the negative active material can be, for example, 1 nm or more and 100 µm or less. When the negative active material is, for example, a carbon material, the average particle size thereof may be preferably 1 µm or more and 100 µm or less. When the negative active material is a metal, a metalloid, a metal oxide, a metalloid oxide, a titanium-containing oxide, a polyphosphoric acid compound or the like, the average particle size thereof may be preferably 1 nm or more and 1 µm or less. By setting the average particle size of the negative active material to be equal to or more than the lower limit, the negative active material is easily produced or handled. By setting the average particle size of the negative active material to be equal to or less than the upper limit, the electron conductivity of the negative active material layer 6 is improved. A crusher, a classifier and the like are used to obtain a powder having a predetermined particle size. The crushing method and the powder classification method can be selected from, for example, the methods exemplified for the positive electrode layer 1.

The content of the negative active material in the negative active material layer 6 is preferably 10% by mass or more and 95% by mass or less, more preferably 30% by mass or more, and still more preferably 50% by mass or more. By setting the content of the negative active material within the above range, the electric capacity of the energy storage device 10 can be further increased.

When the negative active material layer 6 contains a solid electrolyte, the content of the solid electrolyte is preferably 5% by mass or more and 90% by mass or less, more preferably 15% by mass or more and 70% by mass or less, and may be still more preferably 20% by mass or more and 50% by mass or less. By setting the content of the solid electrolyte within the above range, the electric capacity of the energy storage device 10 can be further increased. When the solid electrolyte according to an embodiment of the present invention is used for the negative active material layer 6, the content of the solid electrolyte according to an embodiment of the present invention in an all solid electrolyte in the negative active material layer 6 is preferably 50% by mass or more, more preferably 70% by mass or more, still more preferably 90% by mass or more, and even more preferably substantially 100% by mass.

The mixture or composite of the negative active material and the solid electrolyte can be obtained by replacing the positive active material with the negative active material in the mixture or composite of the positive active material and the solid electrolyte described above.

An average thickness of the negative active material layer 6 is preferably 30 µm or more and 1,000 µm or less, and more preferably 60 µm or more and 500 µm or less. By setting the average thickness of the negative active material layer 6 to be equal to or more than the lower limit, the energy storage device 10 having a high energy density can be obtained. By setting the average thickness of the negative active material layer 6 to be equal to or less than the upper limit, the size of the energy storage device 10 can be reduced.

### [Isolation layer]

The isolation layer 3 contains a solid electrolyte. As the solid electrolyte contained in the isolation layer 3, various solid electrolytes can be used in addition to the solid electrolyte according to an embodiment of the present invention described above, and among them, it is preferable to use a sulfide-based solid electrolyte. The content of the solid electrolyte in the isolation layer 3 is preferably 70% by mass or more, more preferably 90% by mass or more, still more preferably 99% by mass or more, and even more preferably substantially 100% by mass in some cases. When the solid electrolyte according to an embodiment of the present invention is used for the isolation layer 3, the content of the solid electrolyte according to an embodiment of the present invention in an all solid electrolyte in the isolation layer 3 is preferably 50% by mass or more, more preferably 70% by mass or more, still more preferably 90% by mass or more, and even more preferably substantially 100% by mass.

The isolation layer 3 may contain optional components such as an oxide such as Li₃PO₄, a halogen compound, a binder, a thickener, and a filler. The optional components such as a binder, a thickener, and a filler can be selected from the materials exemplified for the positive active material layer 5.

An average thickness of the isolation layer 3 is preferably 1 µm or more and 50 µm or less, and more preferably 3 µm or more and 20 µm or less. By setting the average thickness of the isolation layer 3 to be equal to or more than the lower limit, the positive electrode layer 1 and the negative electrode layer 2 can be highly reliably insulated. By setting the average thickness of the isolation layer 3 to be equal to or less than the upper limit, the energy density of the energy storage device 10 can be increased.

The energy storage device of the present embodiment can be mounted as an energy storage unit (battery module) configured by assembling a plurality of energy storage devices on a power source for automobiles such as electric vehicles (EV), hybrid vehicles (HEV), and plug-in hybrid vehicles (PHEV), a power source for electronic devices such as personal computers and communication terminals, or a power source for power storage, or the like. In this case, the technique according to an embodiment of the present invention may be applied to at least one energy storage device included in the energy storage unit.

Fig. 2 shows an example of an energy storage apparatus 30 formed by assembling energy storage units 20 in each of which two or more electrically connected energy storage devices 10 are assembled. The energy storage apparatus 30 may include a busbar (not illustrated) for electrically connecting the two or more energy storage devices 10, a busbar (not illustrated) for electrically connecting the two or more energy storage units 20, and the like. The energy storage unit 20 or the energy storage apparatus 30 may include a state monitor (not illustrated) for monitoring the state of one or more energy storage devices.

### <Method of manufacturing energy storage device>

The method of manufacturing an energy storage device according to an embodiment of the present invention can be performed by a generally known method except that the solid electrolyte according to an embodiment of the present invention is used for preparation of at least one of the positive electrode layer, the isolation layer, and the negative electrode layer. Specifically, the production method includes, for example, (1) providing a positive electrode mixture, (2) providing a material for an isolation layer, (3) providing a negative electrode composite, and (4) stacking a positive electrode layer, the isolation layer, and a negative electrode layer. Hereinafter, each step will be described in detail.

### (1) Step of providing positive electrode mixture

In this step, a positive electrode mixture for forming a positive electrode layer (positive active material layer) is usually prepared. A method of preparing the positive electrode mixture is not particularly limited, and can be appropriately selected according to the purpose. Examples thereof include a mechanical milling treatment of a material of the positive electrode mixture, compression molding of the positive active material, and sputtering using a target material of the positive active material. When the positive electrode mixture contains a mixture or a composite containing a positive active material and a solid electrolyte, this step can include mixing the positive active material and the solid electrolyte using, for example, a mechanical milling method or the like to prepare a mixture or a composite of the positive active material and the solid electrolyte.

### (2) Step of providing material for isolation layer

In this step, the material for the isolation layer, which is used for forming the isolation layer, is usually prepared. When the energy storage device is a lithium ion energy storage device, the material for the isolation layer can be a solid electrolyte. The solid electrolyte as the material for the isolation layer can be prepared by a conventionally known method. For example, a predetermined material can be obtained by a mechanical milling method. The material for the isolation layer may be prepared by heating a predetermined material to a melting temperature or higher by a melt quenching method, melting and mixing both materials at a predetermined ratio, and quenching the mixture. Examples of other methods of synthesizing the material for the isolation layer include a solid phase method of sealing under reduced pressure and firing, a liquid phase method such as dissolution precipitation, a gas phase method (PLD), and firing under an argon atmosphere after mechanical milling.

### (3) Step of providing negative electrode composite

In this step, a negative electrode composite for forming a negative electrode layer (negative active material layer) is usually prepared. A specific method of preparing the negative electrode composite is the same as that for the positive electrode composite. When the negative electrode composite contains a mixture or a composite containing a negative active material and a solid electrolyte, this step can include mixing the negative active material and the solid electrolyte using, for example, a mechanical milling method or the like to prepare a mixture or a composite of the negative active material and the solid electrolyte.

### (4) Stacking step

In this step, for example, a positive electrode layer having a positive electrode substrate and a positive active material layer, an isolation layer, and a negative electrode layer having a negative electrode substrate and a negative active material layer are stacked. In this step, the positive electrode layer, the isolation layer, and the negative electrode layer may be sequentially formed in this order, or vice versa, and the order of formation of each layer is not particularly limited. The positive electrode layer is formed, for example, by pressure-molding a positive electrode substrate and a positive electrode mixture, the isolation layer is formed by pressure-molding the material for the isolation layer, and the negative electrode layer is formed by pressure-molding a negative electrode substrate and a negative electrode mixture. The positive electrode layer, the isolation layer, and the negative electrode layer may be stacked by pressure-molding the positive electrode substrate, the positive electrode mixture, the material for the isolation layer, the negative electrode mixture, and the negative electrode substrate at a time. The positive electrode layer and the negative electrode layer may be each formed in advance, and stacked by pressure-molding with the isolation layer.

### [Other embodiments]

The present invention is not limited to the aforementioned embodiments, and, in addition to the aforementioned aspects, can be carried out in various aspects with alterations and/or improvements being made. For example, the energy storage device according to the present invention may include a layer other than the positive electrode layer, the isolation layer, and the negative electrode layer. The energy storage device according to the present invention may contain liquid. Examples of such an energy storage device include an energy storage device in which gaps of the positive active material layer 5, the isolation layer 3, the negative active material layer 6, and the like in the energy storage device 10 described above are filled with a nonaqueous electrolyte solution or the like containing an ionic liquid or the like. The energy storage device according to the present invention may be a capacitor or the like in addition to the energy storage device which is a secondary battery.

### EXAMPLES

Hereinafter, the present invention will be described in more detail with reference to examples, but the present invention is not limited to the following examples.

### [Example 1-1]

95(0.75Li₂S·0.25P₂S₅)·5MgI₂(Li₃Mg_{0.11}PS₄I_{0.21}) was synthesized by the following treatment.

### (Provision step)

In a glove box in an argon atmosphere having a dew point of -50°C or lower, Li₂S (99.98%, Aldrich), P₂S₅ (99%, Aldrich), and MgI₂ were weighed at 71.25: 23.75: 5 in terms of molar ratio, and then mixed in a mortar to provide a composition containing Li, P, S, I, and Mg.

### (Reaction step)

The composition was charged into a closed 80 mL zirconia pot containing 160 g of zirconia balls with a diameter of 4 mm. The mechanical milling treatment was performed for 45 hours at the number of revolutions of 510 rpm by a planetary ball mill (from FRITSCH, model number: Premium line P-7) to obtain an intermediate.

### (Heating step)

The intermediate was heated (heat-treated) at 180°C for 2 hours to obtain a solid electrolyte.

### [Examples 1-2, 1-3, and 1-4]

Each solid electrolyte was obtained similarly to Example 1-1 except that the heating temperature in the heating step was as shown in Table 1.

### [Example 2-1]

93(0.75Li₂S·0.25P₂S₅) ·7MgI₂(Li₃Mg_{0.15}PS₄I_{0.30}) was synthesized similarly to Example 1-1 except that the provision step was changed as follows and the heating temperature in the heating step was as shown in Table 1.

### (Provision step)

In a glove box in an argon atmosphere having a dew point of -50°C or lower, Li₂S (99.98%, Aldrich), P₂S₅ (99%, Aldrich), and MgI₂ were weighed at 69.75: 23.25: 7 in terms of molar ratio, and then mixed in a mortar to provide a composition containing Li, P, S, I, and Mg.

### [Example 2-2]

A solid electrolyte was obtained similarly to Example 2-1 except that the heating temperature in the heating step was as shown in Table 1.

### [Example 3-1]

90(0.75Li₂S·0.25P₂S₅) ·10Mgl₂(Li₃Mg_{0.22}PS₄I_{0.44}) was synthesized similarly to Example 1-1 except that the provision step was changed as follows and the heating temperature in the heating step was as shown in Table 1.

### (Provision step)

In a glove box in an argon atmosphere having a dew point of -50°C or lower, Li₂S (99.98%, Aldrich), P₂S₅ (99%, Aldrich), and MgI₂ were weighed at 67.5: 22.5: 10 in terms of molar ratio, and then mixed in a mortar to provide a composition containing Li, P, S, I, and Mg.

### [Example 3-2]

A solid electrolyte was obtained similarly to Example 3-1 except that the heating temperature in the heating step was as shown in Table 1.

### [Example 4-1]

97(0.75Li₂S ·0.25P₂S₅) ·3MgI₂(Li₃Mg_{0.06}PS₄I_{0.12}) was synthesized similarly to Example 1-1 except that the provision step was changed as follows and the heating temperature in the heating step was as shown in Table 1.

### (Provision step)

In a glove box in an argon atmosphere having a dew point of -50°C or lower, Li₂S (99.98%, Aldrich), P₂S₅ (99%, Aldrich), and MgI₂ were weighed at 72.75: 24.25: 3 in terms of molar ratio, and then mixed in a mortar to provide a composition containing Li, P, S, I, and Mg.

### [Example 4-2]

A solid electrolyte was obtained similarly to Example 4-1 except that the heating temperature in the heating step was as shown in Table 1.

### [Example 5-1]

95(0.75Li₂S ·0.25P₂S₅) ·5CaI₂(Li₃Ca_{0.11}PS₄I_{0.21}) was synthesized similarly to Example 1-1 except that the provision step was changed as follows and the heating temperature in the heating step was as shown in Table 1.

### (Provision step)

In a glove box in an argon atmosphere having a dew point of -50°C or lower, Li₂S (99.98%, Aldrich), P₂S₅ (99%, Aldrich), and CaI₂ were weighed at 71.25: 23.75: 5 in terms of molar ratio, and then mixed in a mortar to provide a composition containing Li, P, S, I, and Ca.

### [Example 5-2]

A solid electrolyte was obtained similarly to Example 5-1 except that the heating temperature in the heating step was as shown in Table 1.

### [Example 6-1]

93(0.75Li₂S ·0.25P₂S₅) ·7CaI₂(Li₃Ca_{0.15}PS₄I_{0.30}) was synthesized similarly to Example 1-1 except that the provision step was changed as follows and the heating temperature in the heating step was as shown in Table 1.

### (Provision step)

In a glove box in an argon atmosphere having a dew point of -50°C or lower, Li₂S (99.98%, Aldrich), P₂S₅ (99%, Aldrich), and CaI₂ were weighed at 69.75: 23.25: 7 in terms of molar ratio, and then mixed in a mortar to provide a composition containing Li, P, S, I, and Ca.

### [Example 6-2]

A solid electrolyte was obtained similarly to Example 6-1 except that the heating temperature in the heating step was as shown in Table 1.

### [Example 7-1]

90(0.75Li₂S ·0.25P₂S₅) ·10CaI₂(Li₃Ca_{0.22}PS₄I_{0.44}) was synthesized similarly to Example 1-1 except that the provision step was changed as follows and the heating temperature in the heating step was as shown in Table 1.

### (Provision step)

In a glove box in an argon atmosphere having a dew point of -50°C or lower, Li₂S (99.98%, Aldrich), P₂S₅ (99%, Aldrich), and CaI₂ were weighed at 67.5: 22.5: 10 in terms of molar ratio, and then mixed in a mortar to provide a composition containing Li, P, S, I, and Ca.

### [Example 7-2]

A solid electrolyte was obtained similarly to Example 7-1 except that the heating temperature in the heating step was as shown in Table 1.

### [Evaluation]

### (1) Powder X-ray diffraction measurement

Powder X-ray diffraction measurement was performed for the solid electrolytes of Examples 1-1 to 7-2 by the above method. As an airtight sample holder for X-ray diffraction measurement, trade name "general-purpose atmosphere separator" from Rigaku Corporation was used. In the X-ray diffraction diagrams of the respective solid electrolytes of Examples 1-1 to 7-2, it was confirmed that all of the solid electrolytes had diffraction peaks in the range of 2θ = 19.9° ± 0.5° and the range of 2θ = 23.6° ± 0.5° derived from the HICP, and had a crystal structure. In the X-ray diffraction diagrams of the respective solid electrolytes of Examples 1-4, 2-2, 5-2, and 6-2, it was confirmed that in all of the solid electrolytes, the diffraction peak located in the range of 19.9° ± 0.5° was the diffraction peak having the strongest diffraction intensity. In the X-ray diffraction diagrams of the respective solid electrolytes of Examples 3-2 and 7-2, it was confirmed that in all of the solid electrolytes, the diffraction peak located in the range of 19.9° ± 0.5° was the diffraction peak having the third strongest diffraction intensity.

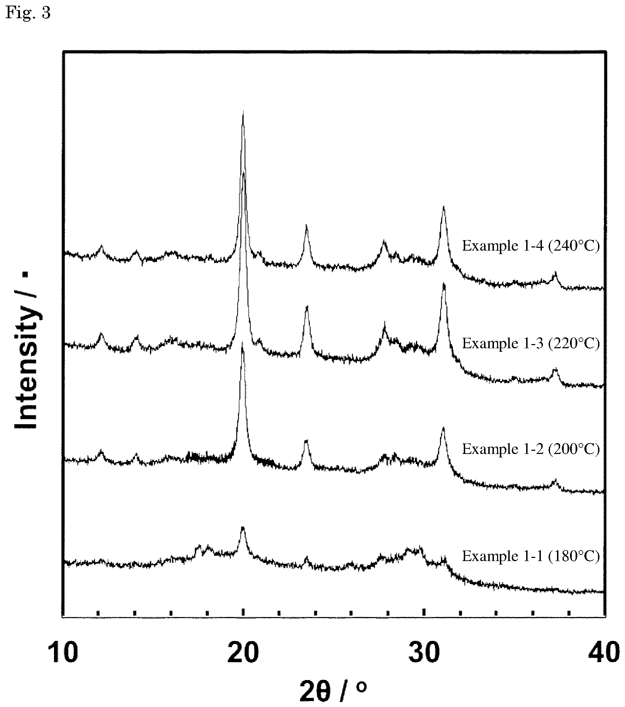

Fig. 3 shows an X-ray diffraction diagram of the solid electrolytes of Examples 1-1 to 1-4. Diffraction peaks can be confirmed in the range of 2θ = 19.9° ± 0.5° and the range of 20 = 23.6° ± 0.5° derived from the HICP. Although Example 1-3 and Example 1-4 heated to 220°C or higher had diffraction peaks in the range of 2θ = 21.0° ± 0.5° and the range of 2θ = 28.0° ± 0.5° derived from the LICP, the diffraction peak intensities were very small. That is, it was confirmed that in the solid electrolytes having the compositions of Examples 1-1 to 1-4, the thermal stability of the HICP was high, and the formation of the LICP hardly occurred even when the solid electrolytes were exposed to a high temperature of 200°C or higher.

### (2) ionic conductance

The ionic conductance at -25°C (σ₂₅) of the solid electrolyte of each Example was determined by measuring the alternating-current impedance by the above-described method using "VMP-300" from Bio-Logic Science Instruments. The measurement results are shown in Table 1.

Table 2 shows, in the solid electrolyte of each Example heated at 240°C, the diffraction peak intensity I_{H} at 20 = 19.9° ± 0.5° derived from the HICP, the diffraction peak intensity I_{L} at 20 = 21.0° ± 0.5° derived from the LICP, the diffraction peak intensity IB at 20 = 18.1° ± 0.5° derived from the phase of β-Li₃PS₄, the intensity ratio I_{H}/I_{L}, and the intensity ratio I_{H}/I_{β} together with the ionic conductance (σ₂₅) at 25°C. Incidentally, "-" indicates that no diffraction peak was observed, or the diffraction peak intensity was very small, and the value was not obtained.

**[Table 1]**

| | Composition formula | Heating temperature /°C | σ₂₅ /mS/cm |
|---|---|---|---|
| Example 1-1 | 95(0.75Li₂S•0.25P₂S₅) •5MgI₂ (Li₃Mg_{0.11}PS₄I_{0.21}) | 180 | 1.0 |
| Example 1-2 | | 200 | 2.7 |
| Example 1-3 | | 220 | 2.6 |
| Example 1-4 | | 240 | 2.8 |
| Example 2-1 | 93(0.75Li₂S•0.25P₂S₅)•7MgI₂ (Li₃Mg_{0.15}PS₄I_{0.30}) | 220 | 2.3 |
| Example 2-2 | | 240 | 1.7 |
| Example 3-1 | 90(0.75Li₂S•0.25P₂S₅)•10MgI₂ (Li₃Mg_{0.22}PS₄I_{0.44}) | 190 | 1.1 |
| Example 3-2 | | 240 | 0.77 |
| Example 4-1 | 97(0.75Li₂S•0.25P₂S₅)•3MgI₂ (Li₃Mg_{0.06}PS₄I_{0.12}) | 200 | 1.0 |
| Example 4-2 | | 220 | 1.2 |
| Example 5-1 | 95(0.75Li₂S•0.25P₂S₅)•5CaI₂ (Li₃Ca_{0.11}PS₄I_{0.21}) | 220 | 2.1 |
| Example 5-2 | | 240 | 1.0 |
| Example 6-1 | 93(0.75Li₂S•0.25P₂S₅)•7CaI₂ (Li₃Ca_{0.15}PS₄I_{0.30}) | 220 | 2.0 |
| Example 6-2 | | 240 | 1.8 |
| Example 7-1 | 90(0.75Li₂S•0.25P₂S₅)•10CaI₂ (Li₃Ca_{0.22}PS₄I_{0.44}) | 220 | 1.1 |
| Example 7-2 | | 240 | 0.60 |

**[Table 2]**

| | Composition formula | Heating temperature /°C | I_{H} | I_{L} | I_{β} | I_{H}/I_{L} | I_{H}/I_{β} | σ₂₅ /mS/cm |
|---|---|---|---|---|---|---|---|---|
| Example 1-4 | 95(0.75Li₂S•0.25P₂S₅) •5MgI₂ (Li₃Mg_{0.11}PS₄I_{0.21}) | 240 | 7235(2θ = 19.96°) | 410(2θ = 20.95°) | - | 17.65 | - | 2.8 |
| Example 2-2 | 93(0.75Li₂S•0.25P₂S₅) •7MgI₂ (Li₃Mg_{0.15}PS₄I_{0.30}) | 240 | 5176 (2θ = 19.88°) | 2202 (2θ = 20.85°) | - | 2.35 | - | 1.7 |
| Example 3-2 | 90(0.75Li₂S•0.25P₂S₅) •10MgI₂ (Li₃Mg_{0.22}PS₄I_{0.44}) | 240 | 2414 (2θ = 19.94°) | 7645 (2θ = 20.85°) | 1399 (2θ = 18.16°) | 0.32 | 1.73 | 0.77 |
| Example 5-2 | 95(0.75Li₂S•0.25P₂S₅) •5CaI₂ (Li₃Ca_{0.11}PS₄I_{0.21}) | 240 | 2524 (2θ = 19.90°) | 2450 (2θ = 20.83°) | 1117 (2θ = 18.08°) | 1.03 | 2.19 | 1.0 |
| Example 6-2 | 93(0.75Li₂S•0.25P₂S₅) •7CaI₂ (Li₃Ca_{0.15}PS₄I_{0.30}) | 240 | 3968 (2θ = 19.80°) | 2365 (2θ = 20.80°) | 885 (2θ = 18.10°) | 1.68 | 2.67 | 1.8 |
| Example 7-2 | 90(0.75Li₂S•0.25P₂S₅) •10CaI₂ (Li₃Ca_{0.22}PS₄I_{0.44}) | 240 | 2200 (2θ = 19.79°) | 5727 (2θ = 20.87°) | 1306 (2θ = 18.17°) | 0.38 | 1.68 | 0.60 |

As shown in Table 1, the solid electrolyte of each Example containing magnesium or calcium as the element A had a sufficiently high ionic conductance even when heated to 200°C or higher. It can be said that such an effect is superior to the solid electrolyte represented by xLiI · (100-x)(0.75Li₂S ·0.25P₂S₅) described in Patent Document 1 (see Tables 1 and 3, Fig. 7, etc.) in which the ionic conductance is a very low value of about 0.1 mS/cm when heat treatment is performed at 200°C.

From Table 2, it is found that in the solid electrolyte having a high ionic conductivity even when heated to 240°C, the diffraction peak intensity I_{H} at 20 = 19.9° ± 0.5° derived from the HICP is relatively strong, and the intensity ratio I_{H}/I_{L} and the intensity ratio I_{H}/I_{β} tend to be high.

### INDUSTRIAL APPLICABILITY

The solid electrolyte according to the present invention is suitably used as a solid electrolyte for an energy storage device such as an all-solid-state battery.

### DESCRIPTION OF REFERENCE SIGNS

1: positive electrode layer
2: negative electrode layer
3: isolation layer
4: positive electrode substrate
5: positive active material layer
6: negative active material layer
7: negative electrode substrate
10: energy storage device (all-solid-state battery)
20: energy storage unit
30: energy storage apparatus

## Claims

1. A solid electrolyte comprising lithium, phosphorus, sulfur, halogen, and an element A,
wherein the element A is at least one selected from the group consisting of magnesium, calcium, strontium, and barium,
and the solid electrolyte has a crystal structure.

2. The solid electrolyte according to claim 1, wherein a ratio of a content of the element A to a content of the phosphorus is 0.08 or more in terms of molar ratio.

3. The solid electrolyte according to claim 1 or 2, wherein a ratio of the content of the element A to a content of the lithium is 0.03 or more in terms of molar ratio.

4. A solid electrolyte represented by the following Formula 1 and having a crystal structure:
(100-y)[xLi₂S• (1-x)P₂S₅] •yAX_{2•}zY ••• 1
wherein A is at least one selected from the group consisting of Mg, Ca, Sr, and Ba, X is halogen, Y is one or more elements other than Li, P, S, Mg, Ca, Sr, Ba, and halogen, x is a number of 0.5 or more and 0.8 or less, y is a number more than 0 and 20 or less, and z is a number of 0 or more and 25 or less.

5. The solid electrolyte according to any one of claims 1 to 4, wherein there are diffraction peaks in a range of 19.9° ± 0.5° and a range of 23.6° ± 0.5° in an X-ray diffraction diagram using a CuKα ray.

6. The solid electrolyte according to any one of claims 1 to 5, wherein an intensity ratio I_{H}/I_{β} of a diffraction peak intensity I_{H} in a range of 19.9° ± 0.5° to a diffraction peak intensity I_{B} in a range of 18.1° ± 0.5° in the X-ray diffraction diagram using a CuKα ray is 0.2 or more.

7. The solid electrolyte according to claim 5 or 6, wherein the diffraction peak located in the range of 19.9° ± 0.5° in the X-ray diffraction diagram using a CuKα ray is a diffraction peak having the strongest diffraction intensity or a diffraction peak having the second strongest diffraction intensity.

8. The solid electrolyte according to any one of claims 1 to 7, wherein the halogen is one or more elements selected from the group consisting of fluorine, chlorine, bromine, and iodine.

9. The solid electrolyte according to any one of claims 1 to 8, further comprising iodine.

10. The solid electrolyte according to claim 9, wherein a ratio of a content of the iodine to a content of the halogen is 0.1 or more and 1 or less in terms of molar ratio.

11. The solid electrolyte according to any one of claims 1 to 10, further comprising bromine.

12. The solid electrolyte according to any one of claims 1 to 11, wherein a ratio of a total content of the iodine and the bromine to the content of the halogen is 0.5 or more and 1 or less in terms of molar ratio.

13. The solid electrolyte according to claim 11 or 12, further comprising iodine and bromine,
wherein a ratio of a content of the bromine to the total content of the iodine and the bromine is 0.1 or more and 0.9 or less in terms of molar ratio.

14. The solid electrolyte according to any one of claims 1 to 13, wherein a ratio of the content of the lithium to the content of the phosphorus is 1 or more and 5 or less in terms of molar ratio.

15. The solid electrolyte according to any one of claims 1 to 14, wherein a ratio of a content of the sulfur to the content of the phosphorus is 2 or more and 6 or less in terms of molar ratio.

16. The solid electrolyte according to any one of claims 1 to 15, wherein the element A is at least one selected from magnesium and calcium.

17. The solid electrolyte according to any one of claims 1 to 16, wherein an ionic conductance at 25°C is 1 mS/cm or more.

18. A method of producing a solid electrolyte, comprising:
providing a composition containing lithium, phosphorus, sulfur, halogen, and an element A;
reacting the composition to obtain an intermediate; and
heating the intermediate,
wherein the element A is at least one selected from the group consisting of magnesium, calcium, strontium, and barium.

19. An energy storage device comprising the solid electrolyte according to any one of claims 1 to 17.

20. An electronic device comprising the energy storage device according to claim 19.

21. An automobile comprising the energy storage device according to claim 19.
